# EUROPÄISCHE PATENTANMELDUNG

(11) **EP 4 311 649 A1**
(43) Veröffentlichungstag der Anmeldung: **31.01.2024**
(21) Anmeldenummer: 23175547.1
(22) Anmeldetag: 26.05.2023
(51) Int. Cl.: B29C 45/14, B29C 45/16, B29C 44/12, B29C 44/14, B29C 44/58

(54) **DÄMMELEMENT SOWIE SYSTEM UND VERFAHREN ZUR HERSTELLUNG EINES SOLCHEN**

(30) Priorität: 29.07.2022 DE 102022119114
(71) Anmelder: Knaus Tabbert AG, 94118 Jandelsbrunn (DE)
(72) Erfinder: KORNEXL, Christian, 94133 Röhrnbach (DE)
(74) Vertreter: advotec.

(57) **Zusammenfassung**

Die Erfindung betrifft ein Dämmelement (4), umfassend einen Innenkern (3) aus gehärtetem Kunststoff und einen Mantel (17) aus gehärtetem Kunststoff. Das Dämmelement (4) weist mindestens einen Abstandshalter (8) auf, der einen im Innenkern (3) angeordneten Verankerungsabschnitt (10) und einen im Mantel (17) angeordneten Abstandshalterabschnitt (9) umfasst, wobei eine Außenfläche (19) des Abstandshalterabschnitts (9) im Wesentlichen bündig zu einer Außenfläche (20) des Mantels (17) angeordnet ist.

## Beschreibung

Die vorliegende Erfindung betrifft ein System und ein Verfahren zur Herstellung eines Dämmelements sowie ein Dämmelement, welches insbesondere mit einem erfindungsgemäßen System sowie Verfahren hergestellt ist.

Bei dem erfindungsgemäßen Dämmelement handelt es sich um ein solches mit einem Innenkern aus gehärtetem Kunststoff und einem Mantel aus gehärtetem Kunststoff. Derartige Dämmelemente sind aus dem Stand der Technik bekannt. Auch existieren bereits Systeme und Verfahren zur Herstellung solcher Dämmelemente.

So werden derartige Dämmelemente häufig in Form von PU-Formteilen in speziellen Gusswerkzeugen hergestellt, in denen beispielsweise Polyurethan in ein entsprechend geformtes Gusswerkzeug eingebracht wird. Dort kann das Polyurethan aufschäumen und aushärten, so dass nach dem Entnehmen des ausgehärteten Produkts ein der Form des Gusswerkzeuges entsprechendes Formteil vorliegt. Um eine höhere Stabilität zu erreichen, werden die so hergestellten Formteile häufig mit einem Mantel, der meist ebenfalls aus Polyurethan besteht, umhüllt. So wird beispielsweise in DE 10 2017 119 382 ein Verfahren zur Herstellung eines Dämmelements beschrieben, bei dem zunächst ein Innenkern in einem zweiteiligen Formwerkzeug hergestellt wird. Hierzu werden zunächst Glasfasermatten an den Formteilen des Formwerkzeugs angeordnet und anschließend Polyurethan in das geschlossene Formwerkzeug eingebracht. Nach dem Aushärten des Polyurethans wird der so gebildete Innenkern entnommen und mit Abstandshaltern versehen. Die Abstandshalter weisen nadelartige Elemente auf, welche in den Innenkern eingedrückt werden. Anschließend wird der so präparierte Innenkern in ein weiteres Formwerkzeug eingelegt und mit einer fließfähigen, aushärtbaren Kunststoffmasse ummantelt. Das in dem genannten Dokument beschriebene Verfahren hat sich durchaus als vorteilhaft erwiesen. Allerdings ist die Anordnung der Abstandshalter etwas umständlich, was den Produktionsprozess verkompliziert und verlängert. Zudem lässt es sich insbesondere auf der Außenseite, also der Sichtseite der Dämmelemente, nicht gänzlich verhindern, dass sich die Abstandshalter leicht an der Oberfläche abzeichnen, was die Optik der bekannten Dämmelemente beeinträchtigen kann.

Der vorliegenden Erfindung liegt die Aufgabe zugrunde, ein System und ein Verfahren zur Herstellung von Dämmelementen für die Herstellung von Rahmenteilen zur Verfügung zu stellen, welche die Nachteile aus dem Stand der Technik überwinden.

Diese Aufgabe wird gelöst durch ein System mit den Merkmalen des Anspruchs 1 sowie ein Verfahren mit den Merkmalen des Anspruchs 7.

Beim erfindungsgemäßen System weist ein erstes Formteil des Formwerkzeugs mindestens eine Aufnahmeeinrichtung zur lösbaren Verbindung des Formteils mit einem Abstandshalter auf. Des Weiteren umfasst das erfindungsgemäße System einen Abstandshalter mit einem Abstandshalterabschnitt und einem Verankerungsabschnitt. Zur Herstellung eines Innenkerns durch das erfindungsgemäße Verfahren wird der Abstandshalter mit dem ersten Formteil des Formwerkezugs lösbar verbunden, indem der Abstandshalterabschnitt des Abstandshalters in die Aufnahmeeinrichtung im ersten Formteil eingebracht wird und der Verankerungsabschnitt des Abstandshalters in den Hohlraum des geschlossenen Formwerkzeugs ragt. Anschließend wird beim erfindungsgemäßen Verfahren eine fließfähige, aushärtbare Kunststoffmasse in den durch die Formteile des Formwerkzeugs gebildeten Hohlraum eingebracht. Hierbei wird der Verankerungsabschnitt des Abstandshalters in den zu bildenden Innenkern eingegossen. Nach dem Härten der Kunststoffmasse wird das Formwerkzeug geöffnet und der so gebildete Innenkern entnommen. Beim Entnehmen des Innenkerns löst sich die Verbindung zwischen dem Formteil des Formwerkzeugs und dem Abstandshalter, so dass der Abstandshalterabschnitt des Abstandshalters aus dem Innenkern ragt. Somit wird ein Innenkern eines Dämmelements mit bereits vorhandenen Abstandshaltern gebildet. Beim erfindungsgemäßen Verfahren ist es also nicht mehr vonnöten, nach der Herstellung des Innenkerns Abstandshalter am Innenkern zu positionieren. Dadurch wird das Verfahren enorm vereinfacht und beschleunigt.

Das erfindungsgemäße System umfasst ferner ein Schäumwerkzeug zur Ummantelung des vorher im Formwerkzeug hergestellten Innenkerns mit einer aushärtbaren Kunststoffmasse. Ein erstes Formteil des Schäumwerkzeugs umfasst mindestens eine Verbindungseinrichtung zur lösbaren Verbindung des ersten Formteils des Schäumwerkzeugs mit dem sich im zu ummantelnden Innenkern befindenden Abstandshalter. Beim erfindungsgemäßen Verfahren wird also der Innenkern in das Schäumwerkzeug eingebracht, wobei der Abstandshalterabschnitt des mindestens einen Abstandshalters, welcher aus dem Innenkern ragt, mit einer Verbindungseinrichtung des ersten Formteils des Schäumwerkzeugs verbunden wird. Hierbei kontaktiert der Abstandshalterabschnitt eine Formfläche des ersten Formteils. Somit wird ein definierter Abstand zwischen dem Innenkern und dem ersten Formteil des Schäumwerkzeugs geschaffen. Auch eine Formfläche eines zweiten Formteils des Schäumwerkzeugs ist beabstandet zur Oberfläche des Innenkerns angeordnet. Nach dem Schließen des Schäumwerkzeugs wird der Innenkern mit einer aushärtbaren Kunststoffmasse umflutet, wodurch nach dem Aushärtenlassen der Kunststoffmasse ein ummanteltes Dämmelement vorliegt.

Bei einer besonders bevorzugten Ausführungsform des erfindungsgemäßen Systems umfasst die Aufnahmeeinrichtung im ersten Formteil des Formwerkzeugs ein insbesondere rundes Sackloch und/oder eine Nut, insbesondere eine Ringnut, zur Aufnahme eines entsprechenden Rastelements des Abstandshalterabschnitts des Abstandshalters. Beim erfindungsgemäßen Verfahren ist es bevorzugt, dass zur Herstellung der lösbaren Verbindung gemäß Schritt b) eine am Außenumfang des Abstandshalters angeordnete, insbesondere ringförmige Rastnase oder Feder in einer entsprechenden Aufnahme, insbesondere in einer Ringnut, im ersten Formteil des Formwerkzeugs einrastet.

Mit Vorteil handelt es sich bei dem aushärtbaren Kunststoff, aus welchem der Innenkern hergestellt wird, um Polyurethan, insbesondere um Polyurethan mit einer Schaumdichte von ca. 70 kg/m³, wobei das Polyurethan vorzugsweise einen mit Polystyrol vergleichbaren U-Wert aufweist. Insbesondere mit einem Polyurethan mit der genannten Schaumdichte können Dämmelemente mit hoher Steifigkeit und zugleich besonders geringem Gewicht hergestellt werden. Zudem kann eine besonders vorteilhafte Dämmwirkung erzielt werden.

Bei einer besonders bevorzugten Variante des erfindungsgemäßen Verfahrens weist die in Schritt b) hergestellte lösbare Verbindung eine solche Stärke auf, dass sie sich beim Entnehmen des Innenkerns gemäß Schritt e) löst und der Verankerungsabschnitt des Abstandshalters im Innenkern verbleibt und nicht herausgerissen wird. Auf diese Art und Weise lässt sich besonders einfach ein mit Abstandshaltern versehener Innenkern herstellen.

Bei einer besonders bevorzugten Ausführungsform des erfindungsgemäßen Systems weist der Abstandshalter, insbesondere der Abstandshalterabschnitt des Abstandshalters, eine Ausnehmung, insbesondere eine kreisrunde Ausnehmung zur Aufnahme der Verbindungseinrichtung des ersten Formteils des Schäumwerkzeugs auf, wobei in der Ausnehmung vorzugsweise ein Vorsprung, insbesondere eine Ringnut, zum Zusammenwirken mit der Verbindungseinrichtung vorgesehen ist. Mit einer solchen Ausnehmung lässt sich schnell und einfach eine lösbare Verbindung mit der Verbindungseinrichtung des ersten Formteils des Schäumwerkzeugs herstellen. Beim erfindungsgemäßen Verfahren ist es wiederum von Vorteil, dass beim lösbaren Verbinden des mindestens einen Abstandshalters mit einer Verbindungseinrichtung gemäß Schritt f) der eine Ausnehmung aufweisende Abstandshalterabschnitt des Abstandshalters auf einem am ersten Formteil des Schäumwerkzeugs angeordneten Steckbolzen aufgesteckt wird. Auf diese Art und Weise lässt sich der zu ummantelnde Innenkern auch genauestens im Schäumwerkzeug positionieren und zentrieren. Nach dem Aufstecken wirkt vorzugsweise mindestens ein Halteelement, insbesondere mindestens eine Kugel, mit der Ausnehmung im Abstandshalter zusammen. Diese mindestens eine Kugel kann aus dem als Kugeltragbolzen ausgebildeten Steckbolzen ausgefahren werden. Der Steckbolzen wird nach dem Ausfahren des Halteelements beim erfindungsgemäßen Verfahren vorzugsweise zumindest teilweise eingefahren. Dabei wird der Abstandshalter auf das erste Formteil, insbesondere auf eine am ersten Formteil angeordnete Dichtung gezogen, so dass der Abstandshalter Kontakt zum ersten Formteil bzw. der Dichtung hat und ein der Höhe des Abstandshalterabschnitts des Abstandshalters entsprechender Spalt zwischen dem ersten Formteil des Schäumwerkzeugs und dem zu ummantelnden Innenkern besteht.

Beim erfindungsgemäßen System ist der Abstandshalterabschnitt des Abstandshalters im Wesentlichen zylinderförmig ausgebildet, wobei am Außenumfang des Abstandshalterabschnitts eine insbesondere ringförmig ausgebildete Rastnase ausgebildet ist, wobei der Verankerungsabschnitt vorzugsweise einen oberen und einen unteren Ringabschnitt aufweist, welche durch einen ringförmigen Verbindungsabschnitt mit geringerem Durchmesser miteinander verbunden sind. Durch die oben genannte Rastnase lässt sich der Abstandshalter schnell und einfach mit der Aufnahmeeinrichtung des ersten Formteils des Formwerkzeugs lösbar verbinden. Durch die oben genannte Ausbildung des Verankerungsabschnitts mit einem oberen und einem unteren Ringabschnitt lässt sich der Abstandshalter besonders fest im Innenkern verankern.

Zum Fixieren des Innenkerns im Schäumwerkzeug handelt es sich bei der mindestens einen Verbindungseinrichtung des ersten Formteils des Schäumwerkzeugs des erfindungsgemäßen Systems vorzugsweise um einen vorzugsweise ein- und ausfahrbaren Steckbolzen mit insbesondere einem kreisförmigen Querschnitt, wobei der Steckbolzen vorzugsweise mindestens eine, vorzugsweise mehrere ein- und ausfahrbare Kugeln aufweist, wobei der Steckbolzen mit Kugeln vorzugsweise mit einem doppelt wirkenden Luftzylinder gekoppelt ist. Mit einem solchen Steckbolzen ist es ideal möglich, eine feste Verbindung zwischen dem Steckbolzen und dem Abstandshalterabschnitt des Abstandshalters zu schaffen, um den Innenkern durch Einziehen des Steckbolzens auf das erste Formteil zu ziehen und so einen Kontakt herzustellen. Nach der Herstellung des fertig umfluteten Innenkerns und damit des herzustellenden Dämmelements müssen die Kugeln des Steckbolzens lediglich eingefahren werden, um die Verbindung zwischen dem Abstandshalter und dem Steckbolzen schnell und einfach lösen zu können.

Mit Vorteil ist die mindestens eine Verbindungseinrichtung des ersten Formteils des Schäumwerkzeugs von einer sich auf dem Formteil befindenden umlaufenden Dichtung umgeben. Durch diese Dichtung wird verhindert, dass Kunststoffmasse in das Schäumwerkzeug eindringt.

Bei einer bevorzugten Variante des erfindungsgemäßen Verfahrens bildet das erste Formteil des Schäumwerkzeugs bei Schritt f) das Unterteil des Schäumwerkzeugs und wird nach dem Fixieren des Innenkerns um 180° verschwenkt, so dass es nach Schritt f) das Oberteil des Schäumwerkzeugs bildet und der Innenkern am ersten Formteil in einem Abstand zum unteren, zweiten Formteil hängt. Dadurch ist es möglich, dass der gesamte Innenkern gleichmäßig umflutet werden kann, obwohl an der dem zweiten Formteil zugewandten Seite des Innenkerns kein einziger Abstandshalter angeordnet ist. Dadurch ist es wiederum möglich, dass diese Seite besonders eben und glatt ausgebildet werden kann, da an dieser Seite kein Abstandshalter im Mantel des Dämmelements zu finden ist. Diese Seite wird idealerweise als Sichtseite und damit als Außenseite bei der Herstellung von Rahmenteilen verwendet. Die an der Innenseite eines fertigen Fahrzeugs sichtbaren Abstandshalter sind optisch nicht störend und werden ohnehin oft nachträglich verkleidet.

Mit Vorteil ist der aushärtbare Kunststoff zur Herstellung des Mantels Polyurethan, insbesondere kompaktes Polyurethan mit einer Dichte von ca. 1000 kg/m³. Mit einem derartigen Polyurethan ist es möglich, einen in Leichtbauweise hergestellten Polyurethankern mit einem besonders steifen Mantel zu umziehen. Auf diese Art und Weise entsteht ein besonders steifes und stabiles Bauteil, welches sich zudem durch ein besonders niedriges Gewicht auszeichnet.

Mit Vorteil wird zum Lösen der Verbindung zwischen dem Steckbolzen und dem Abstandshalter beim erfindungsgemäßen Verfahren das mindestens eine Halteelement, insbesondere die mindestens eine Kugel, wieder in den Steckbolzen eingefahren.

Die vorliegende Erfindung betrifft ferner ein Dämmelement, insbesondere hergestellt durch ein erfindungsgemäßes Verfahren, umfassend einen Innenkern aus gehärtetem Kunststoff und einen Mantel aus gehärtetem Kunststoff, welches gekennzeichnet ist durch mindestens einen Abstandshalter, umfassend einen im Innenkern angeordneten Verankerungsabschnitt und einen im Mantel angeordneten Abstandshalterabschnitt, wobei eine Außenfläche des Abstandshalterabschnitts im Wesentlichen bündig zur Außenfläche des Mantels angeordnet ist.

Einer der großen Vorteile des erfindungsgemäßen Dämmelements besteht darin, dass der mindestens eine Abstandshalter als Nullpunkt für nachfolgende Fertigungsschritte dienen kann. Dadurch kann das erfindungsgemäße Dämmelement beispielsweise präzise positioniert werden, um in weiteren Fertigungsschritten verklebt zu werden. Zudem kann der Abstandshalter ideal als Referenzpunkt für Vermessungen dienen.

Mit Vorteil ist in der Außenfläche des Abstandshalterabschnitts eine Ausnehmung vorgesehen. Dadurch lässt sich das Dämmelement optimal fixieren und für nachfolgende Fertigungsschritte exakt ausrichten.

Bei einer besonders bevorzugten Ausführungsform des erfindungsgemäßen Dämmelements ist eine Sichtseite des Dämmelements frei von Abstandshaltern. Ein solches Dämmelement weist eine perfekte, völlig glatte Oberfläche im Bereich der Sichtseite ohne Abzeichnungen von Abstandshaltern auf. Eine besonders glänzende Oberfläche im Bereich der Sichtseite wird erreicht, wenn das zweite Formteil des Schäumwerkzeugs vor dem Einbringen von PU-Schaum hochglanzpoliert wird. Es hat sich herausgestellt, dass das PU diesen Glanz aufnimmt.

Die vorliegende Erfindung betrifft ferner einen Abstandshalter zur Herstellung eines Dämmelements mit Innenkern und Mantel, umfassend einen Verankerungsabschnitt zum Verankern im Innenkern sowie einen Abstandshalterabschnitt, wobei der Abstandshalterabschnitt an seinem Außenumfang ein Rastelement, wie zum Beispiel eine Rastnase oder eine Feder, aufweist und wobei der Abstandshalterabschnitt eine Ausnehmung zur Aufnahme eines Steckbolzens aufweist. Mithilfe des erfindungsgemäßen Abstandshalters lässt sich in idealer Weise mit einem erfindungsgemäßen System und einem erfindungsgemäßen Verfahren ein erfindungsgemäßes Dämmelement herstellen.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1a bis 1f:: den schematischen Aufbau eines erfindungsgemäßen Systems sowie den prinzipiellen Ablauf eines erfindungsgemäßen Verfahrens zur Herstellung eines erfindungsgemäßen Dämmelements;
- Fig. 2a bis 2c:: einen erfindungsgemäßen Abstandshalter;
- Fig. 3a:: eine vergrößerte Darstellung einer Aufnahmeeinrichtung im ersten Formteil eines Formwerkzeugs;
- Fig. 3b:: die Aufnahmeeinrichtung von Fig. 3a mit darin fixiertem Abstandshalter gemäß Fig. 2a bis 2c;
- Fig. 4a bis 4c:: eine Verbindungseinrichtung im ersten Formteil des Schäumwerkzeugs eines erfindungsgemäßen Systems;
- Fig. 5a:: eine Draufsicht auf einen Dichtungseinsatz; und
- Fig. 5b:: einen Querschnitt durch den Dichtungseinsatz gemäß Fig. 5a.

Nachfolgend werden gleiche oder funktionsgleiche Elemente mit den gleichen Bezugsziffern gekennzeichnet.

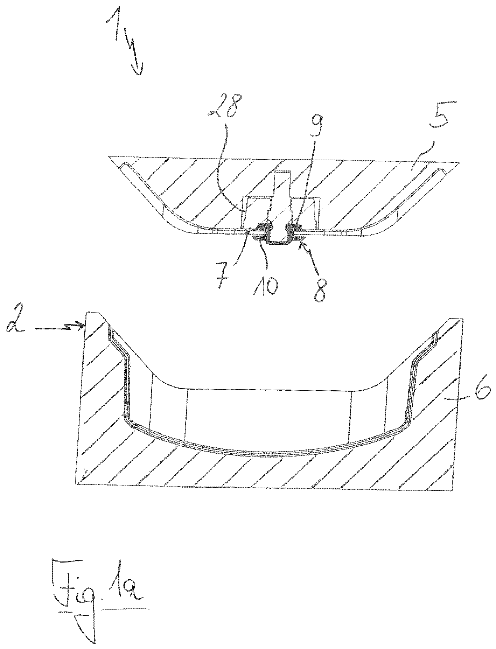

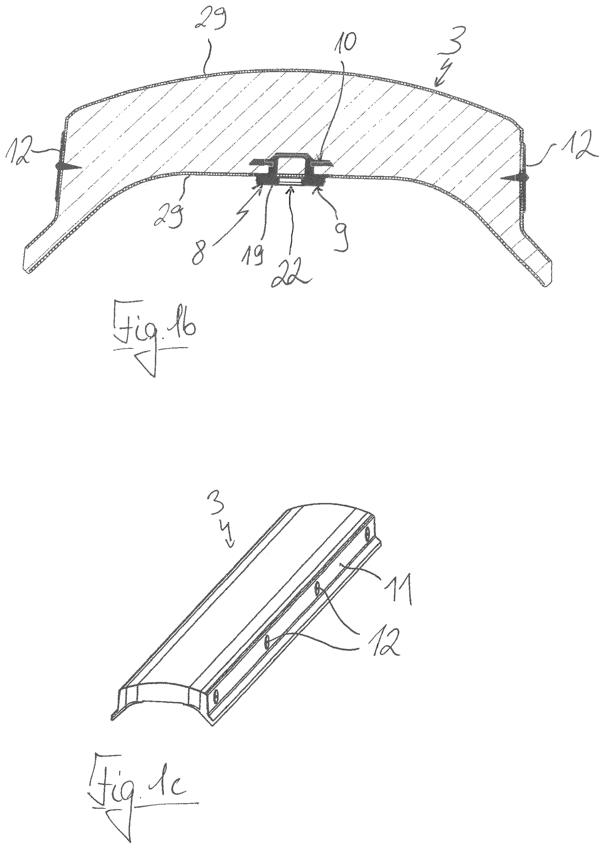

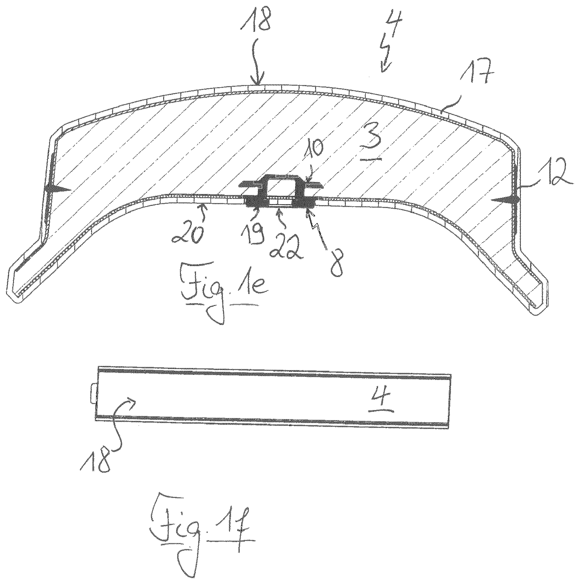

Anhand der Fig. 1a bis 1f wird nun ein Beispiel eines erfindungsgemäßen Systems sowie eines erfindungsgemäßen Verfahrens näher beschrieben. Das in Fig. 1a dargestellte erfindungsgemäße System 1 umfasst ein Formwerkzeug 2 zur Herstellung eines Innenkerns 3 eines herzustellenden erfindungsgemäßen Dämmelements 4. Der Innenkern 3 ist in der Fig. 1b dargestellt. Das erfindungsgemäße Dämmelement 4 ist in Fig. 1e dargestellt.

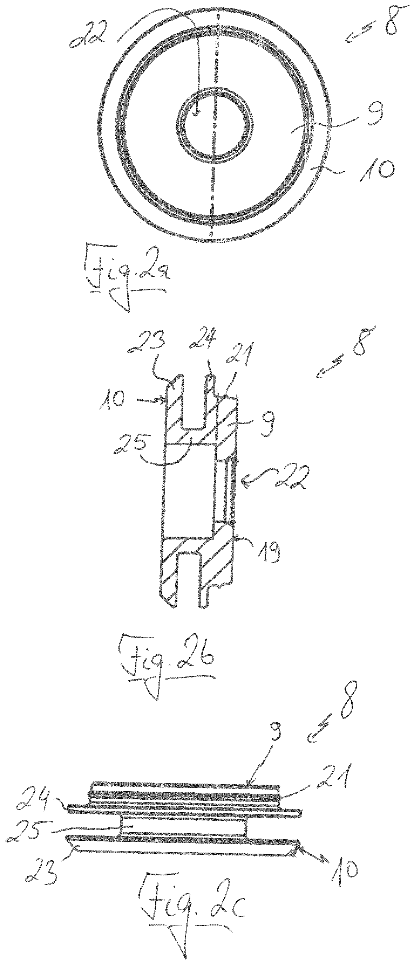

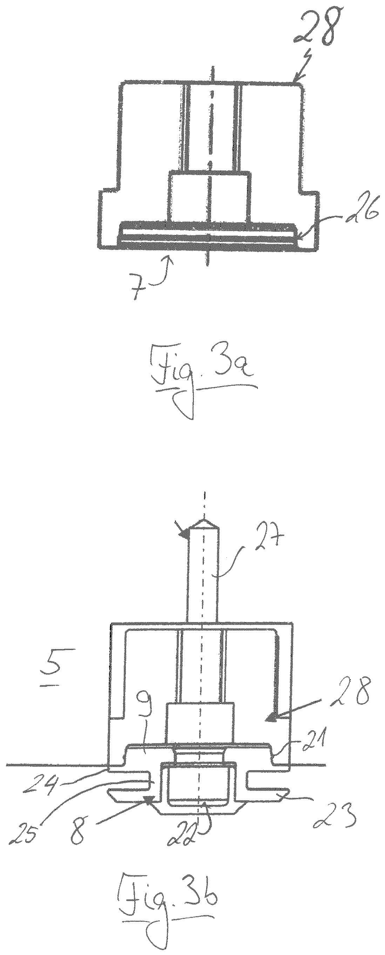

Das Formwerkzeug 2 ist öffen- und schließbar ausgebildet und weist ein erstes Formteil 5 sowie ein zweites Formteil 6 auf. Die Formteile 5 und 6 bilden im geschlossenen Zustand des Formwerkzeugs 2 einen Hohlraum und geben die dreidimensionale Außenform des Innenkerns 3 wieder. Das erste Formteil 5, welches das obere Formteil des Formwerkzeugs 2 bildet, weist drei Aufnahmeeinrichtungen in Form von runden Sacklöchern 7 auf. In Fig. 1a, welche einen Querschnitt des Formwerkzeugs 2 darstellt, ist nur ein solches Sackloch 7 im Schnitt dargestellt. Die Sacklöcher 7 dienen zur lösbaren Verbindung des ersten Formteils 5 mit jeweils einem Abstandshalter 8. Zur Durchführung des erfindungsgemäßen Verfahrens wird also zwischen dem ersten Formteil 5 und mehreren Abstandshaltern 8 eine lösbare Verbindung hergestellt, wobei ein Abstandshalterabschnitt 9 des Abstandshalters 8 in jeweils ein Sackloch 7 im ersten Formteil 5 eingebracht wird. Der Abstandshalterabschnitt 9 befindet sich also nach der Verbindung im Sackloch 7 und damit im Inneren des ersten Formteils 5. Dagegen ragt ein Verankerungsabschnitt 10 des Abstandshalters 8 in den Hohlraum des geschlossenen Formwerkzeugs 2. In Fig. 1a ist im Sackloch 7 ein Abstandshalter 8 integriert, dessen Verankerungsabschnitt 10 aus dem ersten Formteil 5 herausragt. In Fig. 3a ist das Sackloch 7 vergrößert dargestellt. In Fig. 3b ist die in Fig. 1a dargestellte Situation (Sackloch 7 mit integriertem Abstandshaltern 8) vergrößert dargestellt. Details hierzu folgen im weiteren Text. Dies gilt auch für den in den Fig. 2a bis 2c im Detail dargestellten Abstandshalter 8.

Nach dem Schließen des Formwerkzeugs 2 wird Polyurethan mit einer Schaumdichte von ca. 70 kg/m³ in den durch die Formteile 5 und 6 gebildeten Hohlraum eingebracht. Danach lässt man den PU-Schaum im Formwerkzeug 2 aushärten.

Anschließend wird das Formwerkzeug 2 geöffnet und der fertige Innenkern 3 aus dem Formwerkzeug 2 entnommen. Beim Entnehmen des Innenkerns 3 löst sich die Verbindung zwischen dem ersten Formteil 5 und den Abstandshaltern 8, so dass die Abstandshalterabschnitte 9 der Abstandshalter 8 aus dem Innenkern 3 ragen und die Verankerungsabschnitte 10 der Abstandshalter 8 im Innenkern 3 positioniert sind. Fig. 1b zeigt einen fertigen Innenkern 3 im Querschnitt. Fig. 1c zeigt eine perspektivische Darstellung des Innenkerns 3. Neben den Abstandshaltern 8 weist der Innenkern 3 in der vorliegenden Ausführungsform an seinen beiden Seitenflächen 11 weitere Abstandshalter 12 auf, die nach der Herstellung des Innenkerns 3 in diesen eingedrückt worden sind. Bei den Abstandshaltern 12 handelt es sich um solche, die aus dem Stand der Technik bekannt sind. Diese sind für das erfindungsgemäße Verfahren nicht zwingend vonnöten.

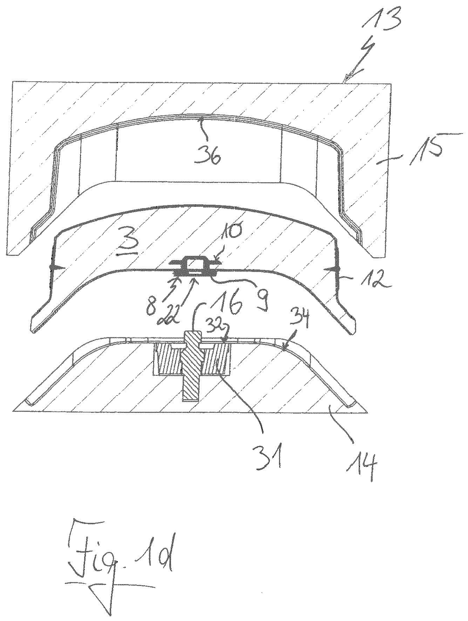

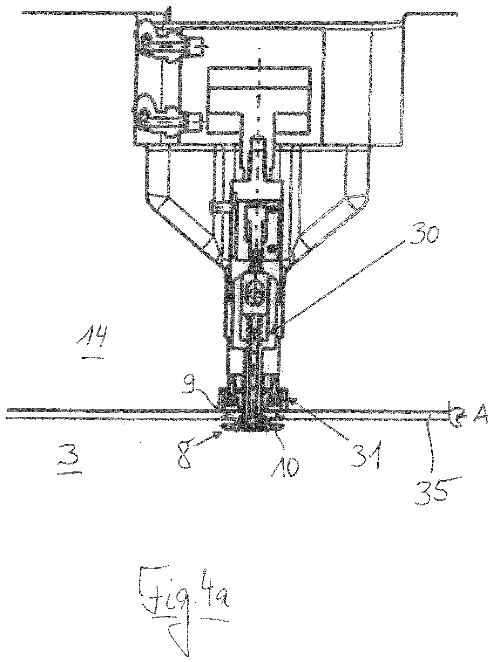

Das erfindungsgemäße System 1 umfasst ferner ein Schäumwerkzeug 13, welches in der Fig. 1d im Querschnitt schematisch dargestellt ist. Das Schäumwerkzeug 13 ist öffen- und schließbar ausgebildet und weist ein erstes Formteil 14 und ein zweites Formteil 15 auf. Die Formteile 14 und 15 bilden im geschlossenen Zustand des Schäumwerkzeugs 13 einen Hohlraum und geben die dreidimensionale Außenform des herzustellenden Dämmelements 4 wieder. Das erste Formteil 14 weist drei Verbindungseinrichtungen in Form von ausfahrbaren Steckbolzen 16 auf. In der Fig. 1d ist einer der drei Steckbolzen 16 im Querschnitt dargestellt. Der Steckbolzen 16 ist im Detail in den Fig. 4a bis 4c dargestellt und wird im weiteren Text näher beschrieben. Der Steckbolzen 16 dient der lösbaren Verbindung des ersten Formteils 14 mit dem sich im zu ummantelnden Innenkern 3 befindenden Abstandshalter 8.

Zur Durchführung des erfindungsgemäßen Verfahrens wird der Innenkern 3 so im Schäumwerkzeug 13 positioniert, dass die Abstandshalter 8 im Innenkern 3 auf die Steckbolzen 16 im ersten Formteil 14 aufgesteckt werden. Zunächst bildet das erste Formteil 14 das Unterteil des Schäumwerkzeugs 13. Nach dem Fixieren des Innenkerns 3 wird das Schäumwerkzeug 13 um 180° verschwenkt, so dass das erste Formteil 14 das Oberteil des Schäumwerkzeugs 13 bildet und der Innenkern 3 am ersten Formteil 14 in einem Abstand zum unteren zweiten Formteil 15 hängt.

Anschließend wird das Schäumwerkzeug 13 geschlossen, wobei die Formfläche 34 des ersten Formteils 14 des Schäumwerkzeugs 13 durch den vom Innenkern 3 abragenden Abstandshalter 8 von der Oberfläche 29 des Innenkerns 3 beabstandet gehalten wird und wobei die Formfläche 36 des zweiten Formteils 15 des Schäumwerkzeugs 13 ebenfalls beabstandet zur Oberfläche 29 des Innenkerns 3 angeordnet ist, wenngleich zwischen dem Innenkern 3 und dem zweiten Formteil 15 kein Abstandshalter angeordnet ist.

Im nächsten Schritt wird der Innenkern 3 im geschlossenen Schäumwerkzeug 13 mit Polyurethan mit einer Dichte von ca. 1000 kg/m³ umflutet. Nach dem Aushärtenlassen der PU-Masse im Schäumwerkzeug 13 wird die Verbindung zwischen den Abstandshaltern 8 und den Steckbolzen 16 gelöst. Anschließend wird das Schäumwerkzeug 13 geöffnet und das fertig hergestellte Dämmelement 4 entnommen.

In der Fig. 1e ist das Dämmelement 4 im Querschnitt dargestellt. Dieses umfasst den Innenkern 3 und Mantel 17, der den Innenkern 3 umgibt. Die Verankerungsabschnitte 10 der Abstandshalter 8 befinden sich im Innenkern 3. Die Abstandshalterabschnitte 9 der Abstandshalter 8 sind im Mantel 17 integriert. Die Sichtseite 18 des Dämmelements 4 ist frei von Abstandshaltern. Die Außenflächen 19 der Abstandshalterabschnitte 9 der Abstandshalter 8 sind bündig zur Außenfläche 20 des Mantels 17 angeordnet.

Fig. 1f zeigt eine Draufsicht auf eine Sichtseite 18 des Dämmelements 4.

Fig. 2a zeigt eine Draufsicht auf einen erfindungsgemäßen Abstandshalter 8. Fig. 2b zeigt den Abstandshalter 8 von Fig. 2a im Querschnitt. Fig. 2c zeigt eine Seitenansicht des Abstandshalters 8. Der Abstandshalter 8 umfasst einen Verankerungsabschnitt 10 zum Verankern im Innenkern 3 sowie einen Abstandshalterabschnitt 9. Der Abstandshalterabschnitt 9 weist an seinem Außenumfang eine ringförmige Rastnase 21 auf. Der Abstandshalterabschnitt 9 weist ferner eine kreisrunde Ausnehmung 22 zur Aufnahme eines Steckbolzens 16 auf. Der Verankerungsabschnitt 10 weist einen oberen Ringabschnitt 23 und einen unteren Ringabschnitt 24 auf, die durch einen ringförmigen Verbindungsabschnitt 25 mit geringerem Durchmesser miteinander verbunden sind.

Fig. 3a zeigt eine vergrößerte Darstellung des Einsatzes 28 mit dem Sackloch 7, der im ersten Formteil 5 des Formwerkzeugs 2 integriert ist. In der Fig. 3b ist das Sackloch 7 mit integriertem Abstandshalter 8 dargestellt. Das Sackloch 7 weist an seinem Innenumfang eine Ringnut 26 zur Aufnahme der ringförmigen Rastnase 21 des Abstandshalterabschnitts 9 des Abstandshalters 8 auf. Bei der Herstellung der lösbaren Verbindung zwischen dem ersten Formteil 5 und dem Abstandshalter 8 gemäß Schritt b) des erfindungsgemäßen Verfahrens wird der Abstandshalterabschnitt 9 in das Sackloch 7 gesteckt, bis die Rastnase 21 in der Ringnut 26 einrastet. Ist dies erfolgt, befindet sich der Abstandshalterabschnitt 9 im Sackloch 7 des ersten Formteils 5. Dagegen ragt der Verankerungsabschnitt 10 aus dem ersten Formteil 5 heraus. In der Fig. 3b ist eine Schraube 27 dargestellt, welche einen Einsatz 28 im ersten Formteil 5 hält. Der Einsatz 28 wiederum, welcher aus Stahl gebildet ist, bildet das Sackloch 7 aus.

Die Form des Verankerungsabschnitts 10 mit dem oberen und dem unteren Ringabschnitt 23 und 24 ist dahingehend von Vorteil, dass eine stabile Verbindung zwischen dem Innenkern 3 und dem Verankerungsabschnitt 10 geschaffen werden kann. Die so hergestellte Verbindung zwischen dem Innenkern 3 und dem Verankerungsabschnitt 10 ist so stark, dass der Verankerungsabschnitt 10 beim Entnehmen des Innenkerns 3 aus dem Formwerkzeug 2 nicht herausgerissen werden kann. Beim Entnehmen des Innenkerns 3 wird vielmehr die Verbindung zwischen dem Abstandshalterabschnitt 9 und dem Sackloch 7 gelöst.

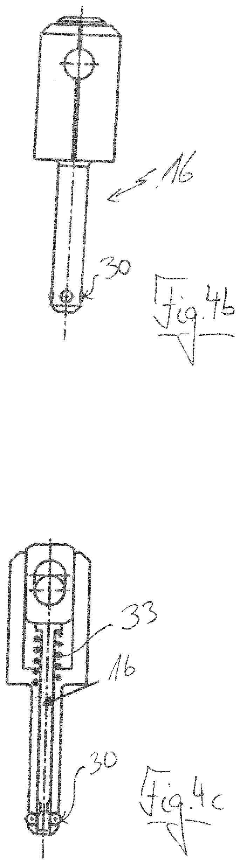

In der Fig. 4a ist ein Längsschnitt durch den im ersten Formteil 14 des Schäumwerkzeugs 13 integrierten Steckbolzen 16 dargestellt. Der Steckbolzen 16 ist in der Fig. 4a bereits mit dem im Innenkern 3 verankerten Abstandshalter 8 lösbar verbunden. Durch den Abstandshalterabschnitt 9 wird ein Abstand A zwischen dem ersten Formteil 14 und der Oberfläche 29 des Innenkerns 3 geschaffen. Der Abstand A bzw. die Breite des Spaltes 35 zwischen dem Formteil 14 und dem Innenkern 3 beträgt ca. 3 mm, da der Abstandshalterabschnitt 9 ca. 3 mm aus dem Innenkern 3 ragt. Die Fig. 4b zeigt den vom ersten Formteil 14 isoliert dargestellten Steckbolzen 16. Fig. 4c ist ein Längsschnitt durch den Steckbolzen 16. Der Steckbolzen 16 weist einen im Wesentlichen kreisförmigen Querschnitt auf. Des Weiteren weist der Steckbolzen 16 vier ein- und ausfahrbare Kugeln 30 auf. Der Steckbolzen 16 ist vertikal verfahrbar und dadurch ein- und ausfahrbar ausgebildet. Der Steckbolzen 16 mit den Kugeln 30 ist an einen doppelt wirkenden Luftzylinder angekoppelt, der mit einem ersten Hub die Kugeln 30 zurückfahren lässt.

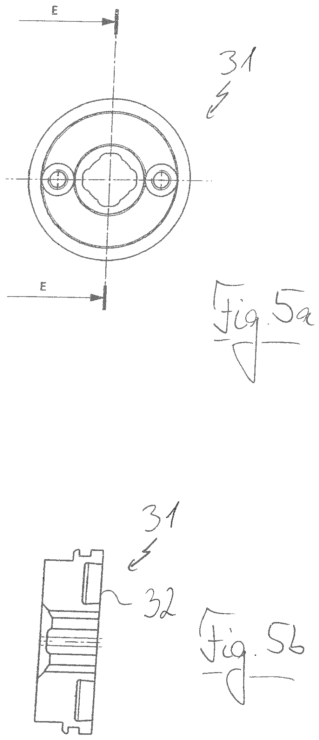

Zur Durchführung des erfindungsgemäßen Verfahrens werden die Abstandshalterabschnitte 9 auf die Steckbolzen 16 aufgesteckt. Bei der hier dargestellten Ausführungsform werden die Kugeln 30 nach dem Aufstecken der Abstandshalter 8 durch Lösen des Hubs des Luftzylinders aus den Steckbolzen 16 ausgefahren und bilden quasi einen Hinterschnitt, welcher mit dem Innenumfang der Ausnehmung 22 zusammenwirkt. Dies bewirkt eine Klemmwirkung zwischen der Ausnehmung 22 und den Kugeln 30. Danach wird der Steckbolzen 16 durch einen zweiten Hub des Luftzylinders etwas in das erste Formteil 14 eingefahren, wodurch der Abstandshalterabschnitt 9 des Abstandshalters 8 auf das erste Formteil 14 gezogen wird. Im Bereich des als Kugeltragbolzen ausgebildeten Steckbolzens 16 weist das erste Formteil 14 auf seiner Formfläche 34 einen Dichtungseinsatz 31 mit einem ringförmigen Dichtungselement 32 auf, wobei das Dichtungselement 32 eine Ausnehmung im erste Formteil 14 umgibt, durch welche der Steckbolzen 16 geführt wird. Somit wird der Abstandshalterabschnitt 9 beim Einfahren des Steckbolzens 16 auf das Dichtungselement 32 des Dichtungseinsatzes 31 gezogen. Durch den Dichtungseinsatz 31 wird verhindert, dass PU-Schaum beim Umschäumen des Innenkerns 3 in das Schäumwerkzeug 13 eindringt. Der Dichtungseinsatz 31 ist in den Fig. 5a und 5b dargestellt.

Vor dem Schäumvorgang wird das erste Formteil 14, welches zunächst das untere Formteil des Schäumwerkzeugs 13 bildet, nach dem Aufstecken des Innenkerns 3 durch Verschwenken des Schäumwerkzeugs 13 um 180° verschwenkt, so dass das erste Formteil 14 nach dem Verschwenken das obere Formteil bildet, so dass der Innenkern 3 am ersten Formteil 14 hängt. Dabei besteht zwischen dem jetzt unteren, zweiten Formteil 15 und dem Innenkern 3 ein Abstand, welcher ebenfalls 3 mm entspricht, so dass ein gleichmäßig dicker Mantel 17 beim Umschäumen des Innenkerns 3 gebildet werden kann.

Zum Lösen der Verbindung zwischen den Steckbolzen 16 und den Abstandshaltern 8 werden die Kugeln 30 wieder in die Steckbolzen 16 zurückgefahren, so dass die Verbindung zwischen den Steckbolzen 16 und den Abstandshaltern 8 leicht gelöst werden kann.

Wie der Fig. 4c zu entnehmen ist, ist der Steckbolzen 16 ein Schaltbolzen mit Feder 33.

Es sei noch erwähnt, dass beim erfindungsgemäßen Verfahren vor dem Einbringen der aushärtbaren Kunststoffmasse in das Formwerkzeug 2 die Werkzeugoberflächen mit Trennmittel benetzt werden können. Des Weiteren werden in der Regel Glasmatten oder Glasgewebe auf die Werkzeughälften aufgelegt, um eine erhöhte Stabilität des Innenkerns zu erreichen. Auch die Formteile des Schäumwerkzeugs können vor dem Schäumvorgang mit Trennmittel benetzt werden.

## Patentansprüche

1. System (1) zur Herstellung von Dämmelementen (4) für die Herstellung von Rahmenteilen, umfassend
a) ein Formwerkzeug (2) zur Herstellung eines Innenkerns (3) des herzustellenden Dämmelements (4), wobei das Formwerkzeug (2) öffen- und schließbar ausgebildet ist und ein erstes Formteil (5) und ein zweites Formteil (6) aufweist, welche im geschlossenen Zustand des Formwerkzeugs (2) einen Hohlraum bilden und die dreidimensionale Außenform des Innenkerns (3) wiedergeben, wobei die Formteile (5, 6) im geschlossenen Zustand des Formwerkzeugs (2) miteinander verbunden und im geöffneten Zustand des Formwerkzeugs (2) zumindest teilweise voneinander getrennt sind, wobei das erste Formteil (5) des Formwerkzeugs (2) mindestens eine Aufnahmeeinrichtung (7) zur lösbaren Verbindung des ersten Formteils (5) mit mindestens einem Abstandshalter (8) aufweist,
b) mindestens einen Abstandshalter (8) mit einem Abstandshalterabschnitt (9) und einem Verankerungsabschnitt (10) zum Verankern des Abstandshalters (8) in dem herzustellenden Innenkern (3), wobei der Abstandshalterabschnitt (9) ein Mittel (21) zur lösbaren Verbindung mit der Aufnahmeeinrichtung (7) des ersten Formteils (5) des Formwerkzeugs (2) aufweist;
c) ein Schäumwerkzeug (13) zur Ummantelung des vorher im Formwerkzeug (2) hergestellten Innenkerns (3) mit einer aushärtbaren Kunststoffmasse (17), wobei das Schäumwerkzeug (13) öffen- und schließbar ausgebildet ist und ein erstes Formteil (14) und ein zweites Formteil (15) aufweist, welche im geschlossenen Zustand des Schäumwerkzeugs (13) einen Hohlraum bilden und die dreidimensionale Außenform des Dämmelements (4) wiedergeben, wobei die Formteile (14, 15) des Schäumwerkzeugs (13) im geschlossenen Zustand miteinander verbunden und im geöffneten Zustand zumindest teilweise voneinander getrennt sind, wobei das erste Formteil (14) des Schäumwerkzeugs (13) mindestens eine Verbindungseinrichtung (16) zur lösbaren Verbindung des ersten Formteils (14) des Schäumwerkzeugs (13) mit dem sich im zu ummantelnden Innenkern (3) befindenden Abstandshalter (8) umfasst.

2. System nach Anspruch 1, **dadurch gekennzeichnet, dass** die Aufnahmeeinrichtung im ersten Formteil (5) des Formwerkzeugs (2) ein insbesondere rundes Sackloch (7) und/oder eine Nut, insbesondere eine Ringnut (26), zur Aufnahme eines entsprechenden Rastelements (21) des Abstandshalterabschnitts (9) des Abstandshalters (8) umfasst.

3. System nach einem der Ansprüche 1 oder 2, **dadurch gekennzeichnet, dass** der Abstandshalter (8), insbesondere der Abstandshalterabschnitt (9) des Abstandshalters (8), eine Ausnehmung (22), insbesondere eine kreisrunde Ausnehmung, zur Aufnahme der Verbindungseinrichtung (16) des ersten Formteils (14) des Schäumwerkzeugs (13) aufweist, wobei in der Ausnehmung (22) vorzugsweise ein Vorsprung, insbesondere eine Ringnut, zum Zusammenwirken mit der Verbindungseinrichtung (16) vorgesehen ist.

4. System nach einem der vorhergehenden Ansprüche, **dadurch gekennzeichnet, dass** der Abstandshalterabschnitt (9) des Abstandshalters (8) im Wesentlichen zylinderförmig ausgebildet ist, wobei am Außenumfang des Abstandshalterabschnitts (9) eine insbesondere ringförmig ausgebildete Rastnase (21) angeordnet ist, wobei der Verankerungsabschnitt (10) vorzugweise einen oberen (23) und einen unteren Ringabschnitt (24) aufweist, welche durch einen ringförmigen Verbindungsabschnitt (25) mit geringerem Durchmesser miteinander verbunden sind.

5. System nach einem der vorhergehenden Ansprüche, **dadurch gekennzeichnet, dass** es sich bei der mindestens einen Verbindungseinrichtung des ersten Formteils (14) des Schäumwerkzeugs (13) um einen vorzugsweise ein- und ausfahrbaren Steckbolzen (16) mit insbesondere einem kreisförmigen Querschnitt handelt, wobei der Steckbolzen (16) vorzugsweise ein Kugeltragbolzen mit mindestens einer ein- und ausfahrbaren Kugel (30) ist, wobei der Steckbolzen (16) mit einer Kugel (30) vorzugsweise mit einem doppelt wirkenden Luftzylinder gekoppelt ist.

6. System nach einem der vorhergehenden Ansprüche, **dadurch gekennzeichnet, dass** die mindestens eine Verbindungseinrichtung (16) des ersten Formteils (14) des Schäumwerkzeugs (13) von einer sich auf dem ersten Formteil (14) befindenden umlaufenden Dichtung (32) umgeben ist.

7. Verfahren zur Herstellung eines Dämmelements (4) für die Herstellung von Rahmenteilen, insbesondere mit einem System (1) nach einem der Ansprüche 1 bis 6, umfassend mindestens folgende Schritte:
a) Bereitstellen eines öffen- und schließbaren Formwerkzeugs (2) zur Herstellung eines Innenkerns (3) des Dämmelements (4) mit mindestens einem ersten Formteil (5) und einem zweiten Formteil (6), welche im geschlossenen Zustand des Formwerkzeugs (2) einen Hohlraum bilden und eine dreidimensionale Außenform des Innenkerns (3) wiedergeben, wobei die Formteile (5, 6) im geschlossenen Zustand des Formwerkzeugs (2) miteinander verbunden und im geöffneten Zustand des Formwerkzeugs (2) zumindest teilweise voneinander getrennt sind;
b) Herstellen einer lösbaren Verbindung zwischen dem ersten Formteil (5) des Formwerkzeugs (2) und mindestens einem Abstandshalter (8), wobei ein Abstandshalterabschnitt (9) des Abstandshalters (8) in eine Aufnahmeeinrichtung (7) im ersten Formteil (5) eingebracht wird und ein Verankerungsabschnitt (10) des Abstandshalters (8) in den Hohlraum des geschlossenen Formwerkzeugs (2) ragt;
c) Einbringen einer fließfähigen, aushärtbaren Kunststoffmasse in den durch die Formteile (5, 6) des Formwerkzeugs (2) gebildeten Hohlraum;
d) Aushärtenlassen der Kunststoffmasse im Formwerkzeug (2);
e) Öffnen des Formwerkzeugs (2) und Entnehmen des so gebildeten Innenkerns (3), wobei sich beim Entnehmen des Innenkerns (3) die Verbindung zwischen dem ersten Formteil (5) des Formwerkzeugs (2) und dem mindestens einen Abstandshalter (8) löst, so dass der Abstandshalterabschnitt (9) des Abstandshalters (8) aus dem Innenkern (3) ragt, und der Verankerungsabschnitt (10) des Abstandshalters (8) im Innenkern (3) positioniert ist;
f) Einbringen des Innenkerns (3) in ein öffen- und schließbares Schäumwerkzeug (13), welches ein erstes Formteil (14) und ein zweites Formteil (15) aufweist, wobei der Abstandshalterabschnitt (9) des Abstandshalters (8) mit einer Verbindungseinrichtung (16) des ersten Formteils (14) des Schäumwerkzeugs (13) lösbar verbunden wird und eine Formfläche (34) des ersten Formteils (14) direkt oder über ein Dichtelement kontaktiert;
g) Schließen des Schäumwerkzeugs (13), wobei die Formfläche (34) des ersten Formteils (14) des Schäumwerkzeugs (13) durch den vom Innenkern (3) abragenden Abstandshalter (8) von der Oberfläche des Innenkerns (3) beabstandet gehalten wird und wobei eine Formfläche (36) des zweiten Formteils (15) des Schäumwerkzeugs (13) ebenfalls beabstandet zur Oberfläche (29) des Innenkerns (3) angeordnet ist;
h) Umfluten des Innenkerns (3) im geschlossenen Schäumwerkzeug (13) mit einer aushärtbaren Kunststoffmasse;
i) Aushärtenlassen der Kunststoffmasse im Schäumwerkzeug (13);
j) Lösen der Verbindung zwischen dem mindestens einen Abstandshalter (8) und der Verbindungseinrichtung (16) des ersten Formteils (14) des Schäumwerkzeugs (13);
k) Öffnen des Schäumwerkzeugs (13) und Entnehmen des fertigen Dämmelements (4) mit Innenkern (3), Mantel (17) und Abstandshalter (8).

8. Verfahren nach Anspruch 7, **dadurch gekennzeichnet, dass** zur Herstellung der lösbaren Verbindung gemäß Schritt b) eine am Außenumfang des Abstandshalters (8) angeordnete, insbesondere ringförmige Rastnase (21) oder Feder in einer entsprechenden Aufnahme, insbesondere in einer Ringnut (26), im ersten Formteil (5) des Formwerkzeugs (2) einrastet.

9. Verfahren nach einem der Ansprüche 7 oder 8, **dadurch gekennzeichnet, dass** es sich bei dem aushärtbaren Kunststoff, aus welchem der Innenkern (3) hergestellt wird, um Polyurethan, insbesondere um Polyurethan mit einer Schaumdichte von ca. 70 kg/m³ handelt, wobei das Polyurethan vorzugweise einen mit Polystyrol vergleichbaren U-Wert aufweist.

10. Verfahren nach einem der Ansprüche 7 bis 9, **dadurch gekennzeichnet, dass** die in Schritt b) hergestellte lösbare Verbindung eine solche Stärke aufweist, dass sie sich beim Entnehmen des Innenkerns (3) gemäß Schritt e) löst und der Verankerungsabschnitt (10) des Abstandshalters (8) im Innenkern (3) verbleibt und nicht herausgerissen wird.

11. Verfahren nach einem der Ansprüche 7 bis 10, **dadurch gekennzeichnet, dass** beim lösbaren Verbinden des mindestens einen Abstandshalters (8) mit einer Verbindungseinrichtung (16) gemäß Schritt f) der eine Ausnehmung (22) aufweisende Abstandshalterabschnitt (9) des Abstandshalters (8) auf einen am ersten Formteil (14) des Schäumwerkzeugs (13) angeordneten Steckbolzen (16) aufgesteckt wird, wobei nach dem Aufstecken mindestens ein Halteelement, insbesondere mindestens eine Kugel (30), die mit der Ausnehmung (22) zusammenwirkt, aus dem Steckbolzen (16) ausgefahren wird, wobei der Steckbolzen (16) nach dem Ausfahren des Halteelements (30) zumindest teilweise eingefahren wird und den Abstandshalter (8) auf das erste Formteil (14), insbesondere auf eine am ersten Formteil (14) angeordnete Dichtung (32) zieht, so dass der Abstandshalter (8) Kontakt zum ersten Formteil (14) bzw. der Dichtung (32) hat und ein der Höhe des Abstandshalterabschnitts (9) des Abstandshalters (8) entsprechender Spalt (35) zwischen dem ersten Formteil (14) des Schäumwerkzeugs (13) und dem zu ummantelnden Innenkern (3) besteht.

12. Verfahren nach einem der Ansprüche 7 bis 11, **dadurch gekennzeichnet, dass** das erste Formteil (14) des Schäumwerkzeugs (13) bei Schritt f) das Unterteil des Schäumwerkzeugs (13) bildet und nach dem Fixieren des Innenkerns (3) um 180° verschwenkt wird, so dass es nach Schritt f) das Oberteil des Schäumwerkzeugs (13) bildet und der Innenkern (3) am ersten Formteil (14) in einem Abstand zum unteren, zweiten Formteil (15) hängt.

13. Verfahren nach einem der Ansprüche 7 bis 12, **dadurch gekennzeichnet, dass** der aushärtbare Kunststoff zur Herstellung des Mantels (17) Polyurethan, insbesondere kompaktes Polyurethan mit einer Dichte von ca. 1000 kg/m³ ist.

14. Verfahren nach einem der Ansprüche 11 bis 13, **dadurch gekennzeichnet, dass** zum Lösen der Verbindung zwischen dem Steckbolzen (16) und dem Abstandshalter (8) das mindestens eine Halteelement (30) wieder in den Steckbolzen (16) eingefahren wird.

15. Dämmelement (4), insbesondere hergestellt durch ein Verfahren nach einem der Ansprüche 8 bis 14, umfassend einen Innenkern (3) aus gehärtetem Kunststoff und einen Mantel (17) aus gehärtetem Kunststoff, **gekennzeichnet durch** mindestens einen Abstandshalter (8), umfassend einen im Innenkern (3) angeordneten Verankerungsabschnitt (10) und einen im Mantel (17) angeordneten Abstandshalterabschnitt (9), wobei eine Außenfläche (19) des Abstandshalterabschnitts (9) im Wesentlichen bündig zu einer Außenfläche (20) des Mantels (17) angeordnet ist.

16. Dämmelement nach Anspruch 15, **dadurch gekennzeichnet, dass** in der Außenfläche (19) des Abstandshalterabschnitts (9) eine Ausnehmung (22) vorgesehen ist.

17. Dämmelement nach einem der Ansprüche 15 oder 16, **dadurch gekennzeichnet, dass** eine Sichtseite (18) des Dämmelements (4) frei von Abstandshaltern ist.

18. Abstandshalter (8) zur Herstellung eines Dämmelements (4) mit Innenkern (3) und einem Mantel (17), umfassend einen Verankerungsabschnitt (10) zum Verankern im Innenkern (3) sowie einen Abstandshalterabschnitt (9), wobei der Abstandshalterabschnitt (9) an seinem Außenumfang ein Rastelement, wie z. B. eine Rastnase (21) oder eine Feder aufweist und wobei der Abstandshalterabschnitt (9) eine Ausnehmung (22) zur Aufnahme eines Steckbolzens (16) aufweist.
